**Europäisches Patentamt**

**European Patent Office**

**Office européen des brevets**

(11) Publication number: **0 196 870**
**B1**

# (12) EUROPEAN PATENT SPECIFICATION

(45) Date of publication of patent specification: **29.08.90**

(51) Int. Cl.⁵: **H 04 L 12/28**

(21) Application number: **86302235.6**

(22) Date of filing: **26.03.86**

(54) Interface circuit for transmitting and receiving data.

(30) Priority: **28.03.85 IT 6730585**

(43) Date of publication of application:
**08.10.86 Bulletin 86/41**

(45) Publication of the grant of the patent:
**29.08.90 Bulletin 90/35**

(84) Designated Contracting States:
**DE FR GB**

(56) References cited:
**GB-A-2 074 819**

**WESCON TECHNICAL PAPERS, vol. 27, 1983, paper 26/4, pages 1-5, North Hollywood, US; A.P.M.M. MOELANDS: "The I2C bus - An interconnect structure for integrated circuits"**

**INTERFACES IN COMPUTING, vol. 2, no. 3, August 1984, pages 229-240, Elsevier Sequoia, Amsterdam, NL; M. GOPALAKRISHNAN et al.: "Salan: A microprocessor-based medium speed experimental local area network"**

(73) Proprietor: **Ing. C. Olivetti & C., S.p.A.**
**Via G. Jervis 77**
**I-10015 Ivrea (IT)**

(72) Inventor: **Giovannelli, Roberto**
**via Pardio, 19**
**I-56100 Pisa (IT)**
Inventor: **Lazzeri, Paolo**
**via Presenti, 11**
**I-56100 Pisa (IT)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to an interface circuit of a transmitting/receiving unit as set forth in the pre-characterizing part of claim 1.

An interface circuit of this type is known from GB—A—2 074 819 in which the control line is used to enable the various transmitting units to start the action when the control line is free. The faster unit which detects the free status of the control line after a first period of time immediately sends the first data bit on the data line but sends a busy signal on the control line only after a second period of time to enable a slower unit to be also activated. After a further time included in the period of time in which the control line is busy, there is provided sampling of the data line by the various units. The circuit of this reference enables the slower unit to participate correctly in action concerning a communication but requires a continuous arbitration among the various transmitting/receiving units.

An article of A. Moelands (Wescon Technical pages, volume 27, 1983, pages 1—5) relates to an interconnect structure for integrated circuits providing a data line and a clock line. Each circuit provides its clock generator, the clock line is considered free when the line is HIGH and the data are transmitted on the data line while the clock line is in the HIGH status. The device which generates a LOW level on the line overrides a device which generates a HIGH level and there is provided an arbitration procedure between two devices requesting transmission, which is lost by the device which provides a HIGH level on clock line, whilst the line is LOW. Also this device requires a continuous arbitration among the various units and a unit first requesting transmission may lose arbitration.

The object of the present invention is to provide an interface unit determining a given transmitting/receiving unit to be activated as transmitting unit only on the basis of a verified free status of a control line during a first period of time as defined by a suitable internal clock and using the control line as clock line for the transmitted data.

This problem is solved by the interface circuit of the present invention which is defined in claim 1.

These and other features of the invention will be clearly apparent from the following description of a preferred embodiment which is given by way of non-limiting example with reference to the accompanying drawings in which:

Figure 1 is a diagrammatic view showing a plurality of interconnected transmitting/receiving units,

Figure 2 is a block circuit diagram showing a circuit according to the invention applied to one of the transmitting/receiving units of Figure 1, and

Figure 3 is a diagram of the interface circuit according to the invention.

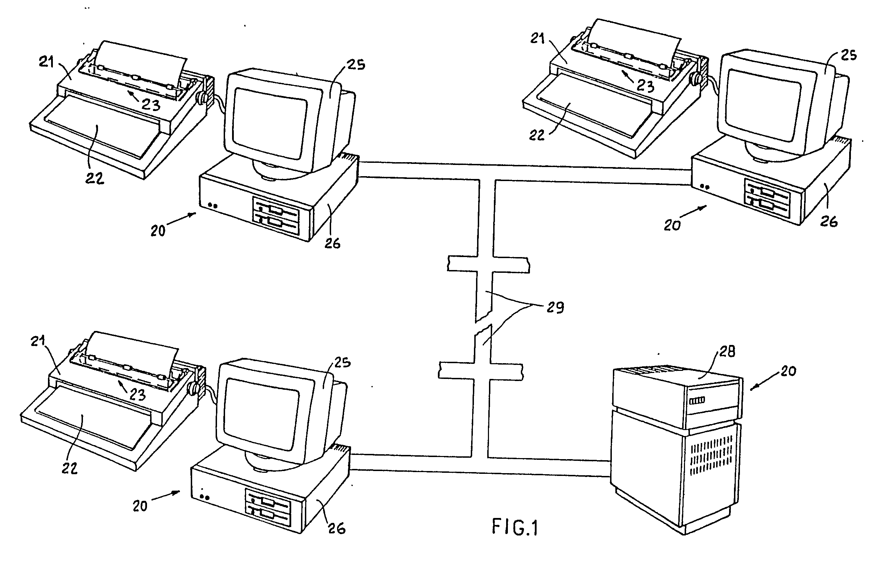

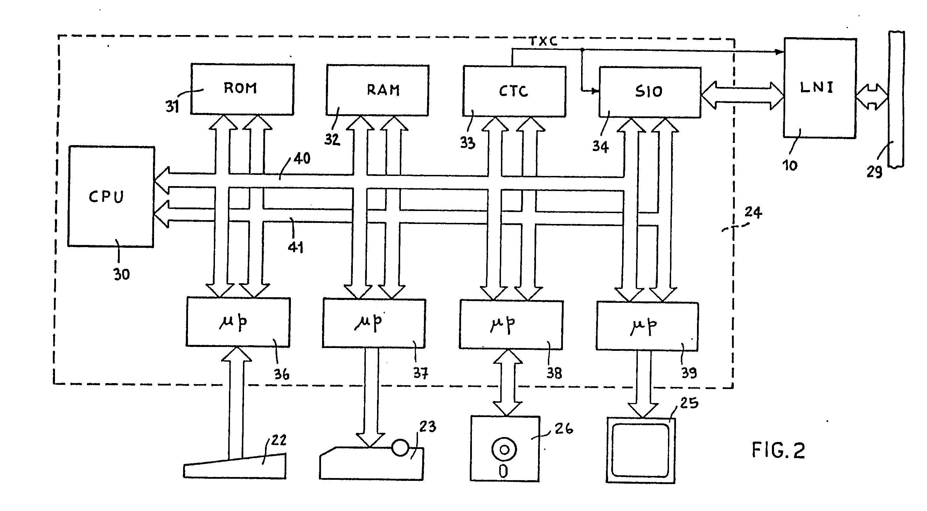

Referring to Figures 1 and 2, a line interface circuit 10 (LNI) is shown applied to each of the transmitting/receiving units 20 which make up a local network of terminals, each one of which may transmit and receive information from any one of the others, by way of a line 29.

Each unit 20 comprises for example a typewriter 21 having a keyboard 22, a printer 23 and an electronic circuit 24, and connected to a video unit 25 and to a unit 26 for processing magnetic floppy discs (Floppy Disc Unit). The local network further comprises a high-capacity memory unit 28, such as for example a unit for processing magnetic hard discs (Hard Disc Unit).

The electronic circuit 24 (Figure 2) comprises a central processing unit (CPU) 30, a read only memory (ROM) 31, a random access memory (RAM) 32, a counter and timer circuit (CTC) 33 and a circuit 34 for serializing the input and output of data (SIO). The components 30, 31, 32, 33 and 34 are all of known type and may for example be formed by integrated circuits from the Z80 line of products from Zilog Inc.

The circuit 24 further comprises four microprocessors (μp) 36, 37, 38 and 39 which are capable of controlling the keyboard 22, the printer 23, the floppy disc unit 26 and the video unit 25 respectively, in known manner. The central unit 30 is connected to the ROM 31, to the RAM 32, to the CTC 33, to the SIO 34 and to the microprocessors 36, 37, 38 and 39 by means of a data bus 40 and an address bus 41.

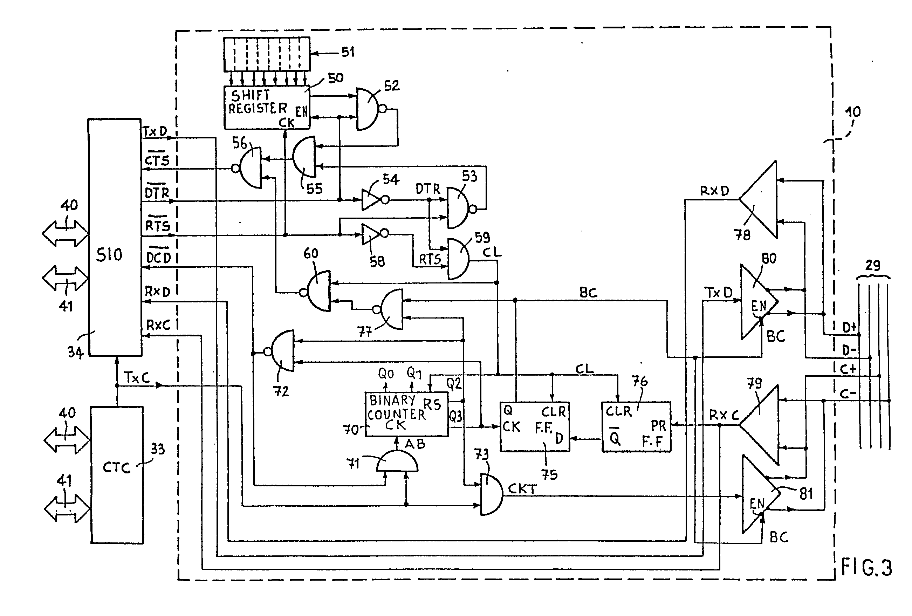

The interface circuit 10 (Figures 2 and 3) is interposed between the circuit SIO 34 and the transmitting/receiving line 29, and is also connected to the circuit CTC 33.

In particular, the circuit 10 comprises a shift register 50 which is connected to a series of eight microswitches 51 which can be selected manually, and to two outputs $\overline{RTS}$ and $\overline{DTR}$ of the circuit SIO 34, which are indicative of the data transmission request to send and data terminals ready respectively.

The output of the register 50 is connected to one of the inputs of an NAND-gate 52, with the signal $\overline{DTR}$ arriving at the other input of the gate.

The circuit 10 further comprises a NAND-gate 53 whose inputs receive the signal $\overline{RTS}$ and a signal DTR which is the signal $\overline{DTR}$ inverted by an inverter 54. The outputs of the gates 52 and 53 are connected to the inputs of an AND-gate 55 whose output is connected to the input of a NAND-gate 56. The signal DTR and a signal RTS which is the signal $\overline{RTS}$ inverted by an inverter 58 are the inputs of an AND-gate 59 whose output is connected to an input of the NAND-gate 60. The output of the gate 60 is connected to an input of the NAND-gate 56 which is capable of generating a signal $\overline{CTS}$ (Clear to Send) for enabling transmission, which is passed to the circuit SIO 34.

The circuit 10 further comprises a four bit binary counter 70 which has a clock input CK, a reset input RS and four outputs Q0, Q1, Q2 and Q3. The input CK of the counter 70 receives a counting signal AB generated by an AND-gate 71, while the input RS of such counter 70 receives a reset signal CL generated by the AND-gate 59. The outputs Q2 and Q3 of the counter 70 are applied to the two inputs of a NAND-gate 72 which is capable of generating a signal $\overline{DCD}$ (Data Carrier Detect) for data carrier detection purpose, which is passed to the circuit SIO 34. The signal DCD and a transmission clock signal T×C generated by the circuit CTC 33 are applied to the inputs of the AND-gate 71. The signal Q2 and the signal T×C are applied to the inputs of an AND-gate 73 which is operable to generate the effective transmission clock signal CKT.

The circuit 10 also comprises two flip-flops 75 and 76 which are contained for example in an integrated circuit of type SN 74LS74 from Texas Instruments, which receive the signal CL at an input CLR. At an input CK the flip-flop 75 receives the signal Q3 generated by the binary counter 70 and generates a signal BC at its output Q. An input D of the flip-flop 75 is connected to an output $\overline{Q}$ of the flip-flop 76 which at its preset input PR receives a reception clock signal R×C.

The signal BC is applied to an input of a NAND-gate 77, another input of which receives the signal Q2 generated by the binary counter 70. The output of the NAND-gate 77 is connected to an input of the NAND-gate 60.

The circuit 10 further comprises four amplifiers 78, 79, 80 and 81 which are capable of performing the functions of line buffers and drivers in known manner. The amplifiers 78, 79 and 80, 81 respectively may be for example of the type contained in the integrated circuits SN 74175 and SN 75174 respectively from Texas Instruments, and are therefore not described in detail herein. The inputs of amplifiers 78 and 79 and the outputs of amplifiers 80 and 81 are connected to the line 29 and in particular to the data line D+ and D− and to the clock line C+ and C−.

The buffer amplifier 78 is operable to generate a data receiver signal R×D every time the data line exhibits a difference between D+ and D−, while the buffer amplifier 79 is operable to generate the signal R×C every time the clock line exhibits a difference between C+ and C−. Signals R×C and R×D are passed to the circuit SIO 34. The driver amplifier 80 receives a data transmitter signal T×D from the circuit SIO 34, and the driver amplifier 81 receives the effective transmission clock signal CKT. The amplifiers 80 and 81 are enabled to transmit by the signal BC generated by the flip-flop 75.

The mode of operation of the above-described circuit is as follows:

Normally the buffer amplifiers 78 and 79 are enabled to receive clock and data from the line 29 and to pass same directly to the circuit SIO 34 as the signals R×C and R×D, while the line drivers 80 and 81 are disabled.

The circuit SIO 34, according to a predetermined software procedure of the program of CPU 30, is adapted to determine, every time it receives a frame of data from the line 29, if that frame of data is actually for that particular unit 20 of the network. In fact, during an initializing phase of the network, in a known manner and under control of the CPU 30, the circuit SIO 34 performs a reading cycle of the shift register 50. More in particular, to do that, the circuit SIO 34 causes the signal $\overline{DTR}$ to pass to level 1, enabling the register 50 and disabling the transmission, through the AND-gate 59 which causes its output signal CL to pass to level 0. The register 50 is read utilizing the signal $\overline{RTS}$ which clocks the same register 50. The eight bit code stored into the register 50 is then transferred into an internal register (not shown in the drawing) of the circuit SIO 34 through the gates 52, 55 and 56 so that, every time a frame of data arrives from line 29, the circuit SIO 34 can compare the eight bit code stored in its internal register with the eight bit address contained at the beginning of each frame of data to determine if such frame of data shall be or not received and transmitted to the CPU 30.

When data are to be transmitted by one of the units 20, first of all the line 29 is sampled to find out if a transmission is already taking place on the line 29. To do that, according to a characteristic of the invention, the circuit 10 verifies if at least one clock arrives from the line 29 within a certain time. Thus the circuit SIO 34 causes the signals $\overline{DTR}$ and $\overline{RTS}$ both to pass to level 0, so that the output signal CL of the AND-gate 59 goes to level 1 causing the reset of flip-flops 75 and 76 and of the binary counter 70, which causes all its outputs Q0—Q3 to go to level 0. In such condition the NAND-gate 72 causes its output signal $\overline{DCD}$ to pass to level 1, so that the AND-gate 71 is enabled to pass every clock pulse T×C, generated by the circuit CTC 33, to the binary counter 70, while the AND-gate 73 remains disabled and the signal CKT is maintained at level 0.

The binary counter 70 counts the clock pulses T×C and causes its output Q3 to pass to level 1 after the counting of eight clocks. During each period of time, if the signal R×C is switched at least once from level 1 to zero, for the presence of a clock signal on the line 29 or a switching to zero of lines C+ and C−, also the output $\overline{Q}$ of the flip-flop 76 goes to level 0, and remains at such level 0 until a new reset is operated by signal CL. In this manner, when the output Q3 of the counter 70 goes to level 1, the value of $\overline{Q}$ is transferred to the output Q of the flip-flop 75, so that the signal BC, which acts to enable the transmission drivers 80 and 81, remains at level 0 (drivers 80 and 81 disabled) when the line 29 is occupied, while it goes to level 1 (drivers 80 and 81 enabled) when the line 29 is free.

The binary counter 70 continues to count the clock pulses T×C until both its outputs Q2 and Q3 go to level 1, after twelve clocks from the beginning of the counting. In this condition, the NAND-gate 72 causes its output signal $\overline{DCD}$ to pass to level 0 so that the AND-gate 71 ceases to allow the clock signals T×C to pass to the counter 70.

During the period of time from the eighth clock until the twelfth clock received by the counter 70, if the drivers 80 and 81 are enabled by the signal BC, the signal CKT, which remains at level 0, keeps the line 29 occupied, so that this condition cax be immediately detected by the other units 20 of the network.

The result of the operation of sampling of line 29 determines also the logic value of the signal CTS which indicates if data can be transmitted ($\overline{\text{CTS}}$=0) or that the line is occupied ($\overline{\text{CTS}}$=1). If the line 29 is free, the data are then transmitted together with their timing clock at a frequency particular to the transmitting unit 20.

## Claims

1. An interface circuit (10) of a transmitting/receiving unit (20) for transmitting and receiving binary data in serial mode between a plurality of transmitting/receiving units (20) which are connected together through their interface circuits by a data line (29 D+, D−) and a control line (29 C+, C−), and comprising a data circuit (34) for transmitting and receiving the binary data (T×D), and a clock circuit (33) for generating clock pulses (T×C) at a frequency particular to the respective transmitting/receiving unit; and in which the said interface circuit (10) comprises timing circuit means (70) for defining a first period of time and a second period of time following the first period of time; detecting means (79, 76, 75, 59) for detecting a free status on the control line and maintained for the first period of time at the beginning of each transmission; enabling means (77, 60, 56, 80, 56) connected with the detecting means to enable the data circuit (34) to transmit the binary data (T×D); and output control means (81) for keeping the control line occupied jointly with the transmission of the binary data; characterized by

first input means (line BC) of the output control means (81), connected with the detecting means (79, 76, 75, 59) for keeping the control line occupied at the end of the first period of time;

input control means (77) of the said enabling means connected with the timing means (70) for feeding the data circuit (34) with a signal (CTS) causing the transmission of the binary data after the second period of time; and

second input means (73) of the output control means (81), connected with the timing circuit means (70) and the said clock circuit (33) to feed the control line with the clock pulses (CKT) in synchronism, with the said binary data and after the second period of time; and

wherein the detecting means (79, 76, 75, 59) are provided to detect an occupied status of the said control line either in response to any switching from a free status to an occupied status or to a clock pulse on said control line (29 C+, C−).

2. A circuit according to claim 1, characterized in that the timing circuit means (70) comprises a binary counter for counting the said clock pulses (T×C) and having a first output connection (Q3) actuatable to define the first period of time when the counter has concluded a first count and a second output connection (Q2) actuatable to define the said second period of time when the counter has concluded a second count greater than the said first count.

3. A circuit according to claim 1 or 2, characterized in that the detecting means (79, 76, 75, 59) comprise means (79) to detect switchings of signals on the control line (29 C+, C−) and generating a respective switching signal (R×C), and a first store circuit (76) clearable at the beginning of each transmission and responsive to the respective switching signal (R×C) to send a control signal ($\overline{\text{Q}}$) causing the enabling means to inhibit the transmission of the binary data when one of said switchings is revealed at the control line after clearing at the beginning of each transmission.

4. A circuit according to claims 2 and 3, characterized in that the detecting means further comprise a second store circuit (75) having a first input (D) controlled by the control signal ($\overline{\text{Q}}$) of the first circuit store (76), a second input (CK) connected with the second output connection (Q2) of the said counter (70), and an output (Q) to send an enabling signal to the input control means (77) of the enabling means; and a clearing circuit (59) responsive to a beginning signal (DTR, RTS) of the data circuit (34) to clear the said counter (70) and the first and second store circuits (76, 75) at the beginning of each transmission.

5. A circuit according to claim 4, characterized in that the input control means of the said enabling means comprise a gate means (77) connected with the second output connection (Q2) of the said counter (70) and connected with the output of the second store (75) to enable transmission of said binary data only after the second period of time.

6. A circuit according to claim 5, characterized in that the second input means of the output control means (81) comprise a gate circuit (73) having two inputs of which one input is connected with the second output connection (Q2) of the counter (70), and the other input is connected with the clock circuit (33) for causing the control line (29 C+, C−) to be switched from the occupied status immediately after the enabling status of said first gate circuit, to an operative status in which it is fed with the clock pulses.

## Patentansprüche

1. Schnittstellenschaltung (10) einer Sende-Empfangs-Einheit (20) zum Senden und Empfangen binärer Daten im Serienbetrieb zwischen einer Vielzahl von Sende-Empfangs-Einheiten (20), die über ihre Schnittstellenschaltungen durch eine Datenleitung (29 D+, D−) und eine Steuerleitung (29 C+, C−) miteinander verbunden sind und eine Datenschaltung (34) zum Senden und Empfangen der binären Daten (T×D) und eine Taktgeberschaltung (33) zum Eerzeugen von Taktimpulsen (T×C) mit einer der jeweiligen Sende-Empfängs-Einheit zugeordneten Frequenz aufweisen; wobei die erwähnte Schnittstellenschaltung (10) eine Zeitgeberschaltung (70) zur Festlegung einer ersten Zeitperiode und einer zweiten Zeitperiode, die der ersten Zeitperiode folgt; Feststellmittel (79, 76, 75, 59) zum Feststellen eines freien Zustands auf der Steuerleitung, der während der ersten Zeitperiode zu Beginn jeder Sendung aufrechterhalten wird; Freigabemittel (77, 60, 56, 80, 56), die mit den Feststellmitteln verbunden sind, um die Datenschaltung (34) zur Aussendung der binären Daten (T×D) freizugeben; und Ausgabesteuermittel (81) zur Besetzthaltung der Steuerleitung bei der Übertragung der binären Daten aufweist, gekennzeichnet durch

mit den Feststellmitteln (79, 76, 75, 59) verbundene erste Eingabemittel (Leitung BC) der Ausgabesteuermittel (81) zur Besetzthaltung der Steuerleitung am Ende der ersten Zeitperiode;

mit der Zeitgeberschaltung (70) verbundene Eingabesteuermittel (77) der erwähnten Freigabemittel zur Beaufschlagung der Datenschaltung (34) mit einem Signal (CTS), das die Aussendung der binären Daten nach der zweiten Zeitperiode auslöst; und

mit der Zeitgeberschaltung (70) und der erwähnten Taktgeberschaltung (33) verbundene zweite Eingabemittel (73) der Ausgabesteuermittel (81) zur Beaufschlagung der Steuerleitung mit den Taktimpulsen (CKT) synchron mit den erwähnten binären Daten und nach der zweiten Zeitperiode;

wobei die Feststellmittel (79, 76, 75, 59) vorgesehen sind, um einen Besetztzustand der erwähnten Steuerleitung entweder in Abhängigkeit von einer Umschaltung von einem freien Zustand auf einen Besetztzustand oder einem Taktimpuls auf der erwähnten Steuerleitung (29 C+, C−) festzustellen.

2. Schnittstellenschaltung nach Anspruch 1, dadurch gekennzeichnet, daß die Zeitgeberschaltung (70) einen Binärzähler zum Zählen der erwähnten Taktimpulse (T×C) aufweist, der einen ersten Ausgangsanschluß (Q3), der betätigbar ist, um die erste Zeitperiode festzulegen, wenn der Zähler einen ersten Zählwert erreicht hat, und einen zweiten Ausgangsanschluß (Q2) aufweist, der betätigbar ist, um die erwähnte zweite Zeitperiode festzulegen, wenn der Zähler einen zweiten Zählwert erreicht hat, der größer als der erste Zählwert ist.

3. Schnittstellenschaltung nach Anspruch 1 oder 2, dadurch gekennzeichnet, daß die Feststellmittel (79, 76, 75, 59) Mittel (79) zum Feststellen des Umschaltens von Signalen auf der Steuerleitung (29 C+, C−) und zum Erzeugen eines entsprechenden Umschaltsignals (R×C) sowie eine erste Speicherschaltung (76) aufweisen, die zu Beginn jeder Sendung löschbar ist und in Abhängigkeit von dem jeweiligen Umschaltsignal (R×C) ein Steuersignal ($\overline{Q}$) aussendet, das die Freigabemittel veranlaßt, die Aussendung der binären Daten zu verhindern, wenn eine der Umschaltungen auf der Steuerleitung nach dem Löschen zu Beginn jeder Aussendung festgestellt wird.

4. Schnittstellenschaltung nach den Ansprüchen 2 und 3, dadurch gekennzeichnet, daß die Feststellmittel ferner aufweisen: eine zweite Speicherschaltung (75) mit einem ersten Eingang (D), der durch das Steuersignal ($\overline{Q}$) der ersten Speicherschaltung (76) gesteuert wird, mit einem zweiten Eingang (CK), der mit dem zweiten Ausgangsanschluß (Q2) des erwähnten Zählers (70) verbunden ist, und mit einem Ausgang (Q) zur Abgabe eines Freigabesignals an die Eingabesteuermittel (77) der Freigabemittel und eine Löschschaltung (59), die in Abhängigkeit von einem Anfangssignal (DTR, RTS) der Datenschaltung (34) den erwähnten Zähler (70) und die erste und zweite Speicherschaltung (76, 75) zu Beginn jeder Aussendung löscht.

5. Schnittstellenschaltung nach Anspruch 4, dadurch gekennzeichnet, daß die Eingabesteuermittel der erwähnten Freigabemittel ein Tormittel (77) aufweisen, das mit dem zweiten Ausgangsanschluß (Q2) des erwähnten Zählers (70) und mit dem Ausgang der zweiten Speicherschaltung (75) verbunden ist, um eine Aussendung der binären Daten nur nach der zweiten Zeitperiode freizugeben.

6. Schnittstellenschaltung nach Anspruch 5, dadurch gekennzeichnet, daß die zweiten Eingabemittel der Ausgabesteuermittel (81) eine Torschaltung (73) mit zwei Eingängen aufweisen, von denen der eine Eingang mit dem zweiten Ausgangsanschluß (Q2) des Zählers (70) und der andere Eingang mit der Taktgeberschaltung (33) verbunden ist, um das Umschalten der Steuerleitung (29 C+, C−) von dem Besetztzustand unmittelbar nach dem Freigabezustand der erwähnten ersten Torschaltung in einen Betriebszustand zu veranlassen, in dem ihr die Taktimpulse zugeführt werden.

## Revendications

1. Un circuit d'interface (10) d'une unité émettrice/réceptrice (20) pour transmettre et recevoir des données binaires dans un mode de transmission en série entre une pluralité d'unités émettrices/réceptrices (20) qui sont reliées ensemble par l'intermédiaire de leurs circuits d'interfaces par une ligne de données (29 D+, D−) et une ligne de commande (29 C+, C−), et comprenant un circuit de données (34) pour transmettre et recevoir les données binaires (T×D), et un circuit d'horloge (33) pour produire des impulsions d'horloge (T×C) à une fréquence particulière pour l'unité émettrice/réceptrice respective; et où ledit circuit d'interface (10) comprend un moyen formant composant de synchronisation (70) pour définir une première période de temps et une seconde période de temps suivant la première période de temps; des moyens de détection (79, 76, 75, 59) pour détecter un état libre de la ligne de commande et le maintenir pendant la première période de temps au début de chaque transmission; des moyens de validation (77, 60, 56, 80, 56) reliés aux moyens de détection pour autoriser le circuit de données (34) à transmettre les données binaires (T×D); et un moyen de commande de sortie (81) pour maintenir la ligne de commande occupée conjointement avec la transmission des données binaires; caractérisé par:

un premier moyen d'entrée (ligne BC) du moyen de commande de sortie (81), relié aux moyens de détection (79, 76, 75, 59) pour maintenir la ligne de commande occupée à la fin de la première période de temps;

un moyen de commande d'entrée (77) dudit moyen de validation, relié au composant de synchronisation (70) pour appliquer au circuit de données (34) un signal (CTS) produisant la transmission de la donnée binaire après la seconde période de temps; et

un second moyen d'entrée (73) du moyen de commande de sortie (81), relié au composant de synchronisation (70) et audit circuit d'horloge (33) pour appliquer à la ligne de commande les impulsions d'horloge (CKT) en synchronisme avec lesdites données binaires et après la seconde période de temps; et

où les moyens de détection (79, 76, 75, 59) sont agencés de façon à détecter un état d'occupation de ladite ligne de commande soit en réponse à une commutation d'un état libre dans un état occupé soit en réponse à une impulsion d'horloge arrivant dans la ligne de commande (29 C+, C−).

2. Un circuit selon la revendication 1, caractérisé en ce que le composant de synchronisation (70) comprend un compteur binaire pour compter lesdites impulsions d'horloge (T×C), ce compteur comportant une première connexion de sortie (Q3) pouvant être activée pour définir la première période de temps quand le compteur a terminé un premier compte ainsi qu'une seconde connexion de sortie (Q2) pouvant être activée pour définir ladite seconde période de temps quand la compteur a terminé un second compte supérieur audit premier compte.

3. Un circuit selon une des revendications 1 ou 2, caractérisé en ce que les moyens de détection (79, 76, 75, 59) comprennent un moyen (79) pour détecter des commutations de signaux dans la ligne de commande (29 C+, C−) et pour produire un signal de commutation respectif (R×C), et un premier circuit de mémoire (76) pouvant être remis à zéro au début de chaque transmission et répondant au signal de commutation respectif

(R×C) pour émettre un signal de commande ($\overline{Q}$) faisant en sorte que le moyen de validation interdise la transmission de la donnée binaire lorsqu'une desdites commutations est détectée dans la ligne de commande après une remise à zéro au début de chaque transmission.

4. Un circuit selon les revendications 2 et 3, caractérisé en ce que les moyens de détection comprennent en outre un second circuit de mémoire (75) comportant une première entrée (D) commandée par le signal de commande ($\overline{Q}$) du premier circuit de mémoire (76), une seconde entrée (CK) reliée à la seconde connexion de sortie (Q2) dudit compteur (70), et une sortie (Q) pour envoyer un signal de validation au moyen de commande d'entrée (77) du moyen de validation; et un circuit de remise à zéro (59) répondant à un signal de début de transmission (DTR, RTS) du circuit de données (34) pour remettre à zéro ledit compteur (70) et lesdits premier et second circuits de mémoire (76, 75) au début de chaque transmission.

5. Un circuit selon la revendication 4, caractérisé en ce que le moyen de commande d'entrée dudit moyen de validation comprend un moyen formant porte (77), relié à la seconde connexion de sortie (Q2) dudit compteur (70) et relié à la sortie de la seconde mémoire (75), pour permettre une transmission de ladite donnée binaire seulement après la seconde période de temps.

6. Un circuit selon la revendication 5, caractérisé en ce que le second moyen d'entrée du moyen de commande de sortie (81) comprend un circuit à porte (73) comportant deux entrées dont une est reliée à la seconde connexion de sortie (Q2) du compteur (70) tandis que l'autre entrée est reliée au circuit d'horloge (33) pour faire en sorte que la ligne de commande (29 C+, C−) soit commutée de l'état occupé immédiatement après l'état de validation dudit premier circuit à porte jusque dans un état opérationnel où elle reçoit les impulsions d'horloge.

FIG.1

FIG.2

FIG.3